# EUROPEAN PATENT SPECIFICATION

(11) **EP 3 285 043 B1**
(45) Date of publication and mention of the grant of the patent: **20.11.2019**
(21) Application number: 17185797.2
(22) Date of filing: 10.08.2017
(51) Int. Cl.: G01B 11/16, G05B 19/4099

(54) **COMPONENT DEFORMATION MODELING SYSTEM**
SYSTEM ZUR MODELLIERUNG EINER KOMPONENTENVERFORMUNG
SYSTÈME DE MODÉLISATION D'UNE DÉFORMATION DE COMPOSANTS

(30) Priority: 18.08.2016 US 201615240287
(43) Date of publication of application: 21.02.2018
(73) Proprietor: General Electric Company, Schenectady, NY 12345 (US)
(72) Inventor: KORSEDAL, John Robert, Greenville, SC South Carolina 29615-4614 (US); HORNER, Truman Blake, Greenville, SC South Carolina 29615-4614 (US); MOROSO, Joseph Leonard, Greenville, SC South Carolina 29615-4614 (US); SINGH, Anshuman, Greenville, SC South Carolina 29615-4614 (US)
(74) Representative: Freigutpartners IP Law Firm

(56) References cited:
- US-A1- 2006 279 722
- US-A1- 2007 121 121
- US-A1- 2008 182 344
- US-A1- 2013 003 152

## Description

### TECHNICAL FIELD

The subject matter disclosed herein relates to analyzing and modeling manufactured components. More particularly, the subject matter disclosed herein relates to analyzing and modeling deformation in a manufactured part, e.g., a combustion component, by excluding part-to-part variation about that component.

### BACKGROUND

Conventional methods of calculating component deformation can suffer from undesirable complexity and/or inaccuracy. For example, conventional approaches of calculating component deformation, e.g., in combustion systems within gas turbines, require taking measurements of reference points within the system (e.g., deformation of the transition piece seal surface) and/or manufacturing multiple components in order to develop statistically significant comparisons. These approaches can be time consuming, costly, and inaccurate, such as to render them unusable depending on the requirements of the process. US2006279722A1 discloses a system in which deformation of a substrate is monitored during processing of the substrate; the distortion in the substrate is measured after each exposure and processing operation by comparing the position of a plurality of reference marks to values in a database. US2013003152A1 discloses interferometry techniques for surface quality distributions and stress analysis, as applicable to turbine airfoils and other precision components with low-tolerance surface features and protective coatings. US2007121121A1 discloses a method for detecting the deformation of objects, in which during the deformation of the object a sequence of pictures of the object is taken by means of a measurement method and phase images are determined from the pictures. US2008182344A1 discloses a method and a system for determining deformations on a substrate.

### BRIEF DESCRIPTION

The herein claimed invention provides a system as defined in appended claim 1 and a computer program product as defined in appended claim 7

A first aspect of the herein claimed invention provides a system having: at least one computing device configured to model deformation in a set of manufactured components by: forming a pre-exposure statistical distribution of measured coordinates describing the set of manufactured components from a pre-exposure three-dimensional depiction of a first sample of the manufactured component, and forming a post-exposure statistical distribution of measured coordinates describing the set of manufactured components from a post-exposure three dimensional depiction of a second sample of the manufactured component; calculating a difference between parameters of the pre-exposure statistical distribution and the parameters of the post-exposure statistical distribution; and adjusting an expected deformation model for the set of manufactured components based upon the difference between the parameters of the pre-exposure statistical distribution and the post-exposure statistical distribution, to model the deformation of the manufactured component.

A second aspect of the herein claimed invention provides a computer program product having program code, which when executed by at least one computing device, causes the at least one computing device to model deformation in a set of manufactured components, by performing actions including: forming a pre-exposure statistical distribution of measured coordinates describing the set of manufactured components from a pre-exposure three-dimensional depiction of a first sample of the manufactured component, and forming a post-exposure statistical distribution of measured coordinates describing the set of manufactured components from a post-exposure three dimensional depiction of a second sample of the manufactured component; calculating a difference between parameters of the pre-exposure statistical distribution and parameters of the post-exposure statistical distribution; and adjusting an expected deformation model for the set of manufactured components based upon the difference between the parameters of the pre-exposure statistical distribution and the post-exposure statistical distribution, to model the deformation of the manufactured component.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a schematic depiction of a system according to various embodiments of the disclosure.
FIG. 2 shows a flow diagram illustrating a method performed according to particular embodiments of the disclosure.
FIG. 3 shows an example statistical distribution illustrating example parameters according to various embodiments of the disclosure.
FIG. 4 shows an example aging parameter graph including an example fitted model, formed according to various embodiments of the disclosure.
FIG. 5 shows a flow diagram illustrating an additional method according to various embodiments.

It is noted that the drawings of the invention are not necessarily to scale. The drawings are intended to depict only typical aspects of the invention, and therefore should not be considered as limiting the scope of the invention which is defined by the appended claims. In the drawings, like numbering represents like elements between the drawings.

### DETAILED DESCRIPTION

As indicated above, the subject matter disclosed herein relates to modeling and analyzing manufactured components. More particularly, the subject matter disclosed herein relates to modeling and analyzing deformation in a manufactured part, e.g., a combustion component, excluding part-to-part variation about that component.

In contrast to conventional approaches, various embodiments of the disclosure include methods, systems and computer program products for effectively modeling areas of deformation in a component, while minimizing errors due to part-to-part new make variation. Approaches according to various embodiments of the disclosure can be used to model deformation in a component, such as a combustion component (e.g., in a gas turbomachine). However, these approaches can be applied to any number of manufactured components according to various embodiments. In some cases, these approaches may be used to model creep in a manufactured component.

As is known in the art of material science, when a solid material is placed under mechanical stress, over time, that material may have a tendency to slowly move, and even deform permanently, due to that stress. In some cases, the stress applied can be below the yield strength of the material, but due to prolonged exposure, the material may nonetheless deform. This deformation is known in the art as creep. Creep is one form of deformation that may be detected using one or more approaches described according to embodiments of the disclosure.

In the following description, reference is made to the accompanying drawings that form a part thereof, and in which is shown by way of illustration specific example embodiments in which the present teachings may be practiced.

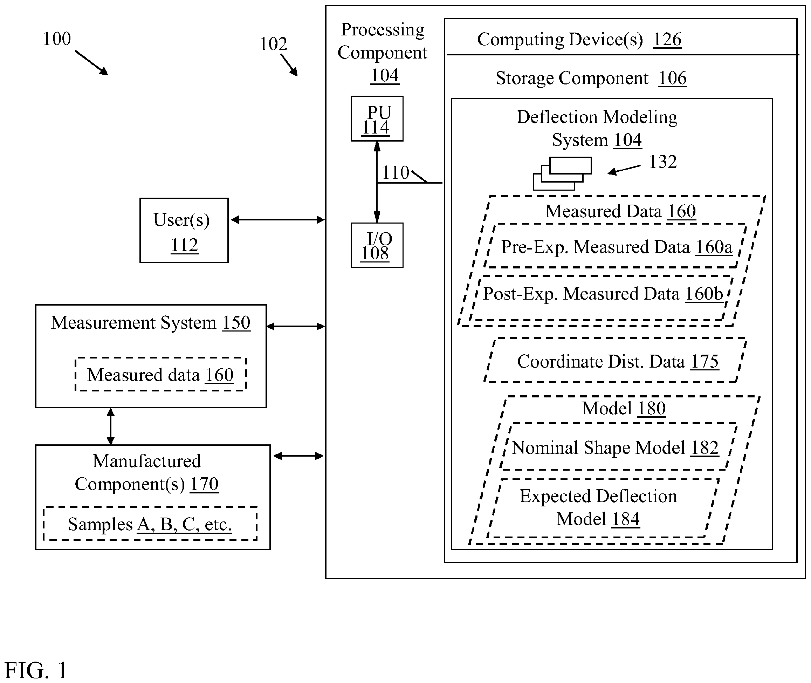

FIG. 1 shows a schematic depiction of a system 100 according to various embodiments. System 100 can include a computer system 102, including at least one computing device 126, and a measurement system 150 coupled (e.g., wirelessly and/or via hard-wired means) with computing device(s) 126 for communicating measured data (three-dimensional (3D) depictions) 160 about a set of manufactured components 170. In various embodiments, measurement system 150 can include a camera system, such as a conventional blue-light camera configured to capture a 3D depiction of manufactured component 170, however a camera system can include any conventional camera or optical device capable of capturing 3D measurement data 160 (e.g., 3D image data and/or 3D coordinate data) about manufactured component 170. In some other cases, measurement system 150 can include a tactile measurement system such as a CMM (coordinate measurement machine). Manufactured component 170 can include any component capable of manufacture, for example, a gas turbomachine component such as a blade, nozzle, shroud, etc., or other component(s) manufactured by casting, forging, and/or additive manufacturing. In various embodiments, the set of manufactured components 170 can include one or more manufactured components 170, e.g., a batch of manufactured components.

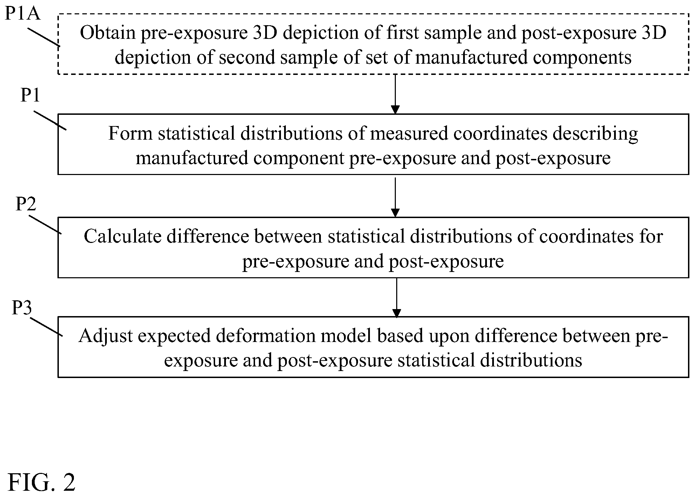

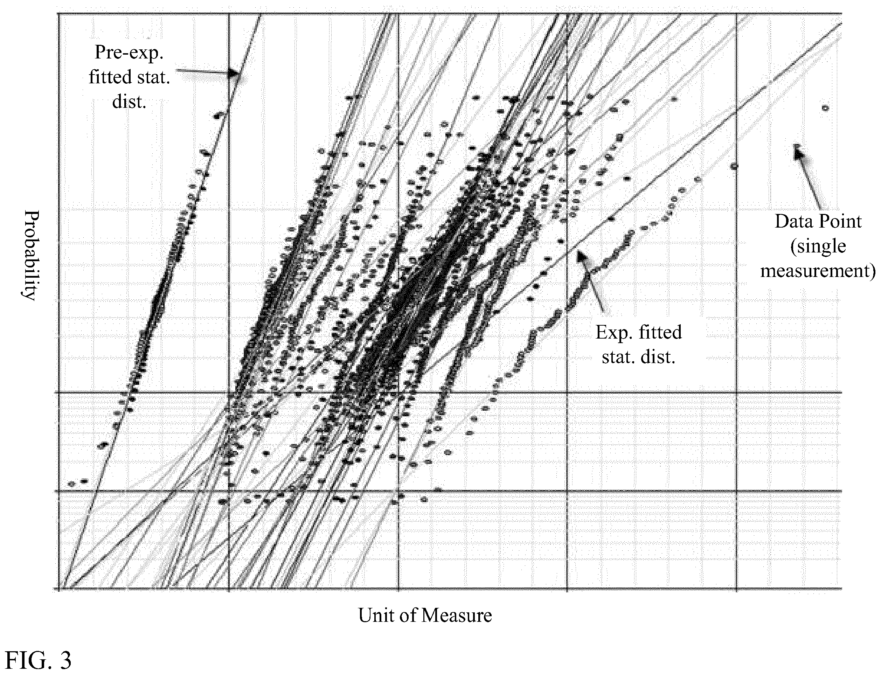

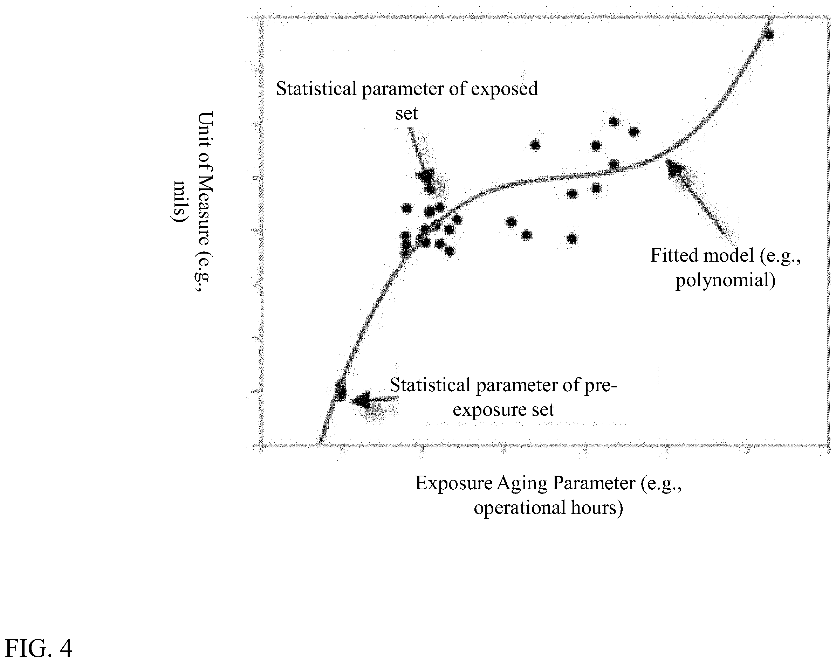

FIG. 2 shows a flow chart illustrating a method according to various embodiments of the disclosure. The flow chart is referred to simultaneously with the system diagram of FIG. 1 and the graphical depictions in FIGS. 3 and 4. In various embodiments, processes can include:
Process P1A (optional pre-process): obtaining (e.g., at deformation modeling system 104) a pre-exposure three-dimensional (3D) depiction (pre-exposure measured data 160a) of a first sample (e.g., sample A) of manufactured component 170, and a post-exposure 3D depiction (post-exposure measured data 160b) of a second sample (e.g., sample B) of manufactured component 170. In various embodiments, the first sample (sample A) can include one or more samples of manufactured component 170, which can include a plurality of samples having, e.g., the same serial number, or in some cases, the first sample can be a statistical distribution of a set (one or more) of samples. Similarly, the second sample (Sample B) can include one or more samples of manufactured component 170, which can include a plurality of samples having, e.g., the same serial number, or in some cases, the first sample can be a statistical distribution of a set (one or more) of samples. According to various embodiments, measured data 160 (in part or in whole), including pre-exposure measured data 160a and post-exposure measured data 160b, can be obtained from measurement system (e.g., camera and/or CMM) 150, either directly, or indirectly, via one or more data stores, databases, etc. (e.g., storage component 106). Further, in some cases, deformation modeling system 104 can obtain measured data 160 from a user 112 and/or a third party, either directly or indirectly, or may obtain stored data from storage component 106. It is understood that measured data 160 can be obtained by any conventional means. In various embodiments, first sample (sample A) of manufactured component 170 is a distinct sample from second sample (sample B) of manufactured component 170. That is, first sample may be a substantially similar sample of component 170 as second sample, e.g., formed from a same manufacturing batch of components 170 or distinct batches formed from a common underlying model (e.g., model 180, including a common nominal shape model 182). However, it is understood that first sample (e.g., sample A) and second sample (e.g., sample B) are not the same physical component, and in the case that first sample and second sample represent statistical distributions of a set of samples, the underlying samples representing those distributions are distinct. In various embodiments, the pre-exposure measured data 160a and post-exposure measured data 160b is captured by measurement system 150, e.g., on demand or in advance. As used herein, exposure is equivalent to at least some usage of component 170 in its intended environment. For example, a combustion component is deployed when it is placed into use in a combustion environment, an automobile component is deployed when it is placed in an automobile that runs for at least some period, etc. It is understood that according to various embodiments, process P1A need not be performed actively, as measured data 160 may already be obtained, stored or otherwise available to deformation modeling system 104 for analysis as described herein.
Process P1: forming a pre-exposure statistical distribution of measured coordinates (coordinate distribution data 175) describing manufactured component 170 from the pre-exposure 3D depiction (pre-exposure measured data 160a) and a post-exposure statistical distribution of the measured coordinates (coordinate distribution data 175) describing manufactured component 170 from the post-exposure 3D depiction (post-exposure measured data 160b). The pre-exposure statistical distribution (a first part of distribution data 175) and post-exposure statistical distribution (a second part of distribution data 175) are both of a common distribution type. For example, both statistical distributions (pre and post-exposure) can include at least one of: a least sums distribution, a normal distribution, a binomial distribution, a lognormal distribution, a Poisson distribution, etc. However, both distributions have a common type so that the distribution parameters from the pre and post-exposure match one another.
Process P2: calculating a difference between parameters the pre-exposure statistical distribution of coordinates (coordinate distribution data 175) and the post-exposure statistical distribution of coordinates (coordinate distribution data 175). In various embodiments, this process includes calculating a difference in parameters in each statistical distribution, e.g., average measurements of exposed set minus average measurement of pre-exposure set, standard deviation of exposed set minus standard deviation of pre-exposure set, etc. FIG. 3 shows an example statistical distribution illustrating example parameters, while FIG. 4 shows an example aging parameter graph including an example fitted model, formed according to various embodiments. As shown, FIG. 3 illustrates a statistical distribution fit for a pre-exposure set of data as compared with a statistical distribution fit for data representing an exposed component. FIG. 4 illustrates example statistical parameters, for an exposed component (exposed set) and a pre-exposure component (pre-exposure set), along with a fitted model (e.g., polynomial) for the two parameters (pre and post-exposure).
Process P3: adjusting an expected deformation model 184 for the set of manufactured components 170 based upon the difference (process P2) between the pre-exposure statistical distribution of coordinates and the post-exposure statistical distribution of coordinates (coordinate distribution data 175). In various embodiments, expected deformation model 184 is derived from a nominal shape model 182, which are both part of a model 180 of manufactured component(s) 170. Nominal shape model 182 can indicate nominal coordinates of manufactured component(s) 170 prior to operational exposure, and expected deformation model 184 can indicate expected deformation of manufactured component(s) 170 due to exposure. Nominal shape model 182 can include 3D coordinates for manufactured component(s) 170, and can include a data file used to form manufactured component(s) 170, for example, a data file used to form a mold or cast into which a material (e.g., metal, composite, etc.) is poured to form manufactured component(s) 170, and/or a data file used to instruct an additive manufacturing system in forming manufactured component(s) 170. In various embodiments, nominal shape model 182 includes a data model of a desired version of manufactured component(s) 170 or a pre-exposure three-dimensional (3D) depiction of a model sample of manufactured component(s) 170. In various embodiments, expected deformation model 184 indicates an expected deformation of manufactured component(s) 170, over a period, due to exposure in operation. Expected deformation model 184 can include, for example, a data file indicating deformation (e.g., creep, strain, material fatigue) of one or more locations within manufactured component(s) 170 due to operational exposure (e.g., due to heating, cooling, moisture, etc.). Expected deformation model 184 can be customizable to particular operational conditions, with variables such as length of operation, temperature, moisture level, revolutions per period, etc. While nominal shape model 182 can indicate a nominal (e.g., ideal) manufactured version of a component, expected deformation model 184 can indicate how that nominal manufactured version of the component will deform over a period under particular conditions.

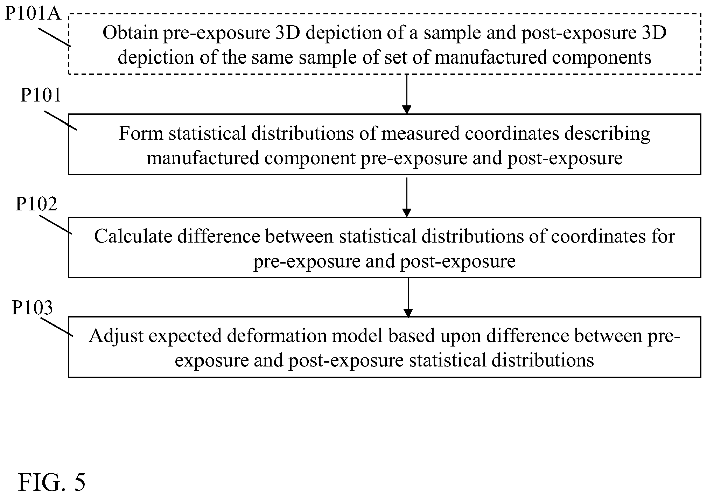

FIG. 5 shows a flow diagram illustrating an additional method according to various embodiments. Some processes in this method may be similar to those described with respect to processes P1-P4 in FIG. 2, however, in contrast to the method described with respect to FIG. 2, this methodology involves measuring a same physical part (e.g., Sample A) of manufactured component 170 both before and after exposure. This method can include:
Process P101A: obtaining a pre-exposure three-dimensional (3D) depiction (pre-exposure measured data 160a) of a sample (e.g., sample A) of manufactured component(s) 170, and a post-exposure 3D depiction (post-exposure measured data 160b) of the same sample (e.g., sample A) of manufactured component(s) 170. It is understood that sample (e.g., sample A) in pre-exposure measured data 160a and post-exposure measured data 160b are the same physical component, set of physical components, or statistical sample of an underlying common set of physical components. In various embodiments, the pre-exposure measured data 160a and post-exposure measured data 160b is captured by measurement system 150, e.g., on demand or in advance.
Process P101: forming a pre-exposure statistical distribution of coordinates (coordinate distribution data 175) describing manufactured component(s) 170 from the pre-exposure 3D depiction (pre-exposure measured data 160a) and a post-exposure statistical distribution of coordinates (coordinate distribution data 175) describing manufactured component(s) 170 from the post-exposure 3D depiction (post-exposure measured data 160b). The pre-exposure statistical distribution (a first part of distribution data 175) and post-exposure statistical distribution (a second part of distribution data 175) are both of a common distribution type.
Process P102: calculating a difference between parameters of the pre-exposure statistical distribution of coordinates (coordinate distribution data 175) and the post-exposure statistical distribution of coordinates (coordinate distribution data 175) for the manufactured component(s) 170. This process may be performed in a substantially similar manner as process P3 in FIG. 2.
Process P103: adjusting expected deformation model 184 for manufactured component(s) 170 based upon the difference (process P3) between the parameters of the pre-exposure statistical distribution of coordinates and the post-exposure statistical distribution of coordinates. This process may be performed in a substantially similar manner as process P3 in FIG. 2.

It is understood that processes P1A-P3 and/or processes P101A-P0103, can be iterated on a periodic, or constant basis. Further, processes P1-P4 and/or processes P101A-P0103 can be performed in any order, and particular processes may be omitted in various embodiments. Additionally, processes P1A-P3 and/or processes P101A-P0103 can be performed on any number of manufactured components 170,

It is understood that in the flow diagrams shown and described herein, other processes may be performed while not being shown, and the order of processes can be rearranged according to various embodiments. Additionally, intermediate processes may be performed between one or more described processes. The flow of processes shown and described herein is not to be construed as limiting of the various embodiments.

Returning to FIG. 1, system is shown including deformation modeling system 104, for performing the functions described herein according to various embodiments of the invention. To this extent, the system 100 includes computer system 102 that can perform one or more processes described herein in order to model deformation in a manufactured component 170. In particular, computer system 102 is shown as including the deformation modeling system 104, which makes computer system 102 operable to model deformation (if present) in manufactured component 170 by performing any/all of the processes described herein and implementing any/all of the embodiments described herein.

The computer system 102 is shown including computing device 126, which can include a processing component 104 (e.g., one or more processors), a storage component 106 (e.g., a storage hierarchy), an input/output (I/O) component 108 (e.g., one or more I/O interfaces and/or devices), and a communications pathway 110. In general, the processing component 104 executes program code, such as the deformation modeling system 104, which is at least partially fixed in the storage component 106. While executing program code, the processing component 104 can process data, which can result in reading and/or writing transformed data from/to the storage component 106 and/or the I/O component 108 for further processing. The pathway 110 provides a communications link between each of the components in the computer system 102. The I/O component 108 can comprise one or more human I/O devices, which enable a user (e.g., a human and/or computerized user) 112 to interact with the computer system 102 and/or one or more communications devices to enable the system user 112 to communicate with the computer system 102 using any type of communications link. To this extent, the deformation modeling system 104 can manage a set of interfaces (e.g., graphical user interface(s), application program interface, etc.) that enable human and/or system users 112 to interact with the deformation modeling system 104. Further, the deformation modeling system 104 can manage (e.g., store, retrieve, create, manipulate, organize, present, etc.) data, such as measured data 160 (including post-exposure 160b and pre-exposure 160a measured data of manufactured component 170), coordinate distribution data 175, and/or model data 180 (including nominal shape model (data) 182 and expected deformation model (data) 184) using any solution, e.g., via wireless and/or hardwired means.

In any event, the computer system 102 can comprise one or more general purpose computing articles of manufacture (e.g., computing devices) capable of executing program code, such as the deformation modeling system 104, installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, the deformation modeling system 104 can be embodied as any combination of system software and/or application software. It is further understood that the deformation modeling system 104 can be implemented in a cloud-based computing environment, where one or more processes are performed at distinct computing devices (e.g., a plurality of computing devices 126), where one or more of those distinct computing devices may contain only some of the components shown and described with respect to the computing device 126 of FIG. 1.

Further, deformation modeling system 104 can be implemented using a set of modules 132. In this case, a module 132 can enable the computer system 102 to perform a set of tasks used by the deformation modeling system 104, and can be separately developed and/or implemented apart from other portions of the deformation modeling system 104. As used herein, the term "component" means any configuration of hardware, with or without software, which implements the functionality described in conjunction therewith using any solution, while the term "module" means program code that enables the computer system 102 to implement the functionality described in conjunction therewith using any solution. When fixed in a storage component 106 of a computer system 102 that includes a processing component 104, a module is a substantial portion of a component that implements the functionality. Regardless, it is understood that two or more components, modules, and/or systems may share some/all of their respective hardware and/or software. Further, it is understood that some of the functionality discussed herein may not be implemented or additional functionality may be included as part of the computer system 102.

When the computer system 102 comprises multiple computing devices, each computing device may have only a portion of deformation modeling system 104 fixed thereon (e.g., one or more modules 132). However, it is understood that the computer system 102 and deformation modeling system 104 are only representative of various possible equivalent computer systems that may perform a process described herein. To this extent, in other embodiments, the functionality provided by the computer system 102 and deformation modeling system 104 can be at least partially implemented by one or more computing devices that include any combination of general and/or specific purpose hardware with or without program code. In each embodiment, the hardware and program code, if included, can be created using standard engineering and programming techniques, respectively.

Regardless, when the computer system 102 includes multiple computing devices 126, the computing devices can communicate over any type of communications link. Further, while performing a process described herein, the computer system 102 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

While shown and described herein as a system and computer program product for model deformation in a manufactured component 170, it is understood that aspects of the invention further provide various alternative embodiments as long as these embodiments fall within the scope of the appended claims.

In another embodiment, the invention provides a method of providing a copy of program code, such as the deformation modeling system 104 (FIG. 1), which implements some or all of a process described herein. In this case, a computer system can process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one computer-readable medium. In either case, the set of data signals can be transmitted/received using any type of communications link.

A method of modeling deformation in a manufactured component 170 (Fig. 1) is also disclosed, said method is however not claimed. In this case, a computer system, such as the computer system 102 (FIG. 1), can be obtained (e.g., created, maintained, made available, etc.) and one or more components for performing a process described herein can be obtained (e.g., created, purchased, used, modified, etc.) and deployed to the computer system. To this extent, the exposure can comprise one or more of: (1) installing program code on a computing device; (2) adding one or more computing and/or I/O devices to the computer system; (3) incorporating and/or modifying the computer system to enable it to perform a process described herein; etc.

In any case, the technical effect of the various embodiments of the disclosure, including, e.g., deformation modeling system 104, is to model deformation in a manufactured component (e.g., component 170). It is understood that according to various embodiments, deformation modeling system 104 could be implemented to model deformation in a plurality of manufactured components, such as manufactured component(s) 170 described herein.

## Claims

1. A system (100) comprising:
at least one computing device (126) configured to model deformation in a set of manufactured components (170) by performing actions including:
forming a pre-exposure statistical distribution (175) of measured coordinates describing the set of manufactured components (170) from a pre-exposure three-dimensional depiction (160a) of a first sample of the manufactured component (170), and forming a post-exposure statistical distribution of measured coordinates describing the set of manufactured components (170) from a post-exposure three-dimensional depiction (160b) of a second sample of the manufactured component (170);
calculating a difference between parameters of the pre-exposure statistical distribution (175) and the post-exposure statistical distribution (175); and
adjusting an expected deformation model (184) for the set of manufactured components (170) based upon the difference between the parameters of the pre-exposure statistical distribution (175) and the post-exposure statistical distribution (175), to model the deformation of the manufactured component (170).

2. The system (100) of claim 1, wherein the expected deformation model (184) is based upon a nominal shape model (182) indicating nominal coordinates of the manufactured component (170) prior to operational exposure, wherein the expected deformation model (184) indicates expected deformation of the manufactured component (170) after operational exposure.

3. The system (100) of claim 2, wherein the nominal shape model (182) includes a data file used to form the manufactured component (170) and wherein the nominal shape model (182) includes a data model (180) of a desired version of the manufactured component (170) or a pre-exposure three-dimensional depiction (160a) of a model sample of the manufactured component (170).

4. The system (100) of claim 1, wherein the first sample is distinct from the second sample but formed from a common nominal shape model (182), and wherein the first sample includes at least one physical component (170) and the second sample includes at least one physical component (170).

5. The system (100) of claim 1, further comprising a camera (150) coupled with the at least one computing device (126), the camera (150) for obtaining the pre-exposure three-dimensional depiction (160a) of the first sample of the manufactured component (170) and the post-exposure three-dimensional depiction of the second sample of the manufactured component (170).

6. The system (100) of claim 1, wherein the pre-exposure statistical distribution (175) and the post-exposure statistical distribution (175) are both of a common statistical distribution type.

7. A computer program product (102) comprising program code, which when executed by at least one computing device (126), causes the at least one computing device (126) to model deformation in a manufactured component (170), by performing actions including:
forming a pre-exposure statistical distribution (175) of measured coordinates describing the set of manufactured components (170) from a pre-exposure three-dimensional depiction (160a) of a first sample of the manufactured component (170), and forming a post-exposure statistical distribution of measured coordinates describing the set of manufactured components (170) from a post-exposure three-dimensional depiction (160b) of a second sample of the manufactured component (170);
calculating a difference between parameters of the pre-exposure statistical distribution (175) and parameters of the post-exposure statistical distribution (175); and
adjusting an expected deformation model (184) for the set of manufactured components (170) based upon the difference between the parameters of the pre-exposure statistical distribution (175) and the post-exposure statistical distribution (175), to model the deformation of the manufactured component (170).

8. The computer program product (102) of claim 7, wherein the expected deformation model (184) is based upon a nominal shape model (182) indicating nominal coordinates of the manufactured component (170) prior to operational exposure, wherein the expected deformation model (184) indicates expected deformation of the manufactured component (170) after operational exposure.

9. The computer program product (102) of claim 8, wherein the nominal shape model (182) includes a data file used to form the manufactured component (170) and wherein the nominal shape model (182) includes a data model (180) of a desired version of the manufactured component (170) or a pre-exposure three-dimensional depiction (160a) of a model sample of the manufactured component (170).

10. The computer program product (102) of claim 7, wherein the first sample is distinct from the second sample but formed from a common nominal shape model (182), and wherein the first sample includes at least one physical component (170) and the second sample includes at least one physical component and wherein the pre-exposure statistical distribution (175) and the post-exposure statistical distribution (175) are both of a common statistical distribution type.

11. The computer program product (102) of claim 7, wherein the manufactured component (170) includes a turbomachine component.

## Patentansprüche

1. System (100), umfassend:
mindestens eine Rechenvorrichtung (126), die konfiguriert ist, um eine Verformung in einem Satz hergestellter Komponenten (170) durch Durchführen von Aktionen zu modellieren, einschließlich:
Bilden einer statistischen Vorbelastungsverteilung (175) von gemessenen Koordinaten, die den Satz hergestellter Komponenten (170) beschreiben, aus einer dreidimensionalen Vorbelastungsdarstellung (160a) einer ersten Probe der hergestellten Komponente (170) und Bilden einer statistischen Nachbelastungsverteilung von gemessenen Koordinaten, die den Satz hergestellter Komponenten (170) aus einer dreidimensionalen Nachbelastungsdarstellung (160b) einer zweiten Probe der hergestellten Komponente (170) beschreiben;
Berechnen einer Differenz zwischen Parametern der statistischen Vorbelastungsverteilung (175) und der statistischen Nachbelastungsverteilung (175); und
Einstellen eines Modells der erwarteten Verformung (184) für den Satz von hergestellten Komponenten (170) basierend auf der Differenz zwischen den Parametern der statistischen Vorbelastungsverteilung (175) und der statistischen Nachbelastungsverteilung (175), um die Verformung der hergestellten Komponente (170) zu modellieren.

2. System (100) nach Anspruch 1, wobei das Modell der erwarteten Verformung (184) auf einem nominalen Formmodell (182) basiert, das die nominalen Koordinaten der hergestellten Komponente (170) vor der betrieblichen Belastung anzeigt, wobei das Modell der erwarteten Verformung (184) die erwartete Verformung der hergestellten Komponente (170) nach der betrieblichen Belastung anzeigt.

3. System (100) nach Anspruch 2, wobei das nominale Formmodell (182) eine Datendatei zum Bilden der hergestellten Komponente (170) einschließt und wobei das nominale Formmodell (182) ein Datenmodell (180) einer gewünschten Version der hergestellten Komponente (170) oder eine dreidimensionale Vorbelastungsdarstellung (160a) einer Modellprobe der hergestellten Komponente (170) einschließt.

4. System (100) nach Anspruch 1, wobei die erste Probe von der zweiten Probe verschieden ist, jedoch aus einem gemeinsamen nominalen Formmodell (182) gebildet ist, und wobei die erste Probe mindestens eine physische Komponente (170) einschließt und die zweite Probe mindestens eine physische Komponente (170) einschließt.

5. System (100) nach Anspruch 1, ferner umfassend eine Kamera (150), die mit der mindestens einen Rechenvorrichtung (126) gekoppelt ist, wobei die Kamera (150) zum Erhalten der dreidimensionalen Vorbelastungsdarstellung (160a) der ersten Probe der hergestellten Komponente (170) und der dreidimensionalen Nachbelastungsdarstellung der zweiten Probe der hergestellten Komponente (170) dient.

6. System (100) nach Anspruch 1, wobei die statistische Vorbelastungsverteilung (175) und die statistische Nachbelastungsverteilung (175) beide von einem gemeinsamen statistischen Verteilungstyp sind.

7. Computerprogrammprodukt (102), umfassend Programmcode, der, wenn er von mindestens einer Rechenvorrichtung (126) ausgeführt wird, bewirkt, dass die mindestens eine Rechenvorrichtung (126) eine Verformung in einer hergestellten Komponente (170) modelliert, indem sie Aktionen durchführt, welche die Folgenden einschließen:
Bilden einer statistischen Vorbelastungsverteilung (175) von gemessenen Koordinaten, die den Satz hergestellter Komponenten (170) beschreiben, aus einer dreidimensionalen Vorbelastungsdarstellung (160a) einer ersten Probe der hergestellten Komponente (170) und Bilden einer statistischen Nachbelastungsverteilung von gemessenen Koordinaten, die den Satz der hergestellten Komponenten (170) von einer dreidimensionalen Nachbelastungsdarstellung (160b) einer zweiten Probe der hergestellten Komponente (170);
Berechnen einer Differenz zwischen Parametern der statistischen Vorbelastungsverteilung (175) und Parametern der statistischen Nachbelastungsverteilung (175); und
Einstellen eines Modells der erwarteten Verformung (184) für den Satz von hergestellten Komponenten (170) basierend auf der Differenz zwischen den Parametern der statistischen Vorbelastungsverteilung (175) und der statistischen Nachbelastungsverteilung (175), um die Verformung der hergestellten Komponente (170) zu modellieren.

8. Computerprogrammprodukt (102) nach Anspruch 7, wobei das Modell der erwarteten Verformung (184) auf einem nominalen Formmodell (182) basiert, das die nominalen Koordinaten der hergestellten Komponente (170) vor der betrieblichen Belastung anzeigt, wobei das Modell der erwarteten Verformung (184) die erwartete Verformung der hergestellten Komponente (170) nach der betrieblichen Belastung anzeigt.

9. Computerprogrammprodukt (102) nach Anspruch 8, wobei das nominale Formmodell (182) eine Datendatei einschließt, die zum Bilden der hergestellten Komponente (170) einschließt und wobei das nominale Formmodell (182) ein Datenmodell (180) einer gewünschten Version der hergestellten Komponente (170) oder eine dreidimensionale Vorbelastungsdarstellung (160a) einer Modellprobe der hergestellten Komponente (170) einschließt.

10. Computerprogrammprodukt (102) nach Anspruch 7, wobei die erste Probe von der zweiten Probe verschieden ist, jedoch aus einem gemeinsamen nominalen Formmodell (182) gebildet ist, und wobei die erste Probe mindestens eine physische Komponente (170) einschließt und die zweite Probe mindestens eine physische Komponente einschließt und wobei die statistische Vorbelastungsverteilung (175) und die statistische Nachbelastungsverteilung (175) beide von einem gemeinsamen statistischen Verteilungstyp sind.

11. Computerprogrammprodukt (102) nach Anspruch 7, wobei die hergestellte Komponente (170) eine Turbomaschinenkomponente einschließt.

## Revendications

1. Système (100) comprenant :
au moins un dispositif informatique (126) configuré pour modéliser une déformation dans un ensemble de composants fabriqués (170) en mettant en œuvre des actions incluant :
la formation d'une distribution statistique avant exposition (175) de coordonnées mesurées décrivant l'ensemble de composants fabriqués (170) à partir d'une représentation tridimensionnelle avant exposition (160a) d'un premier échantillon du composant fabriqué (170), et la formation d'une distribution statistique après exposition de coordonnées mesurées décrivant l'ensemble de composants fabriqués (170) à partir d'une représentation tridimensionnelle après exposition (160b) d'un deuxième échantillon du composant fabriqué (170) ;
le calcul d'une différence entre des paramètres de la distribution statistique avant exposition (175) et de la distribution statistique après exposition (175) ; et
l'ajustement d'un modèle de déformation attendu (184) pour l'ensemble de composants fabriqués (170) sur la base de la différence entre les paramètres de la distribution statistique avant exposition (175) et de la distribution statistique après exposition (175), pour modéliser la déformation du composant fabriqué (170).

2. Système (100) selon la revendication 1, dans lequel le modèle de déformation attendu (184) est basé sur un modèle de forme nominal (182) indiquant des coordonnées nominales du composant fabriqué (170) avant exposition opérationnelle, dans lequel le modèle de déformation attendu (184) indique une déformation attendue du composant fabriqué (170) après exposition opérationnelle.

3. Système (100) selon la revendication 2, dans lequel le modèle de forme nominal (182) inclut un fichier de données utilisé pour former le composant fabriqué (170) et dans lequel le modèle de forme nominal (182) inclut un modèle de données (180) d'une version souhaitée du composant fabriqué (170) ou une représentation tridimensionnelle avant exposition (160a) d'un échantillon de modèle du composant fabriqué (170).

4. Système (100) selon la revendication 1, dans lequel le premier échantillon est distinct du deuxième échantillon, mais formé à partir d'un modèle de forme nominal commun (182), et dans lequel le premier échantillon inclut au moins un composant physique (170) et le deuxième échantillon inclut au moins un composant physique (170).

5. Système (100) selon la revendication 1, comprenant en outre une caméra (150) couplée à l'au moins un dispositif informatique (126), la caméra (150) permettant d'obtenir la représentation tridimensionnelle avant exposition (160a) du premier échantillon du composant fabriqué (170) et la représentation tridimensionnelle après exposition du deuxième échantillon du composant fabriqué (170).

6. Système (100) selon la revendication 1, dans lequel la distribution statistique avant exposition (175) et la distribution statistique après exposition (175) sont l'une et l'autre d'un type commun de distribution statistique.

7. Produit programme informatique (102) comprenant un code de programme, qui lorsqu'il est exécuté par au moins un dispositif informatique (126), amène l'au moins un dispositif informatique (126) à modéliser une déformation dans un composant fabriqué (170), en mettant en œuvre des actions incluant :
la formation d'une distribution statistique avant exposition (175) de coordonnées mesurées décrivant l'ensemble de composants fabriqués (170) à partir d'une représentation tridimensionnelle avant exposition (160a) d'un premier échantillon du composant fabriqué (170), et la formation d'une distribution statistique après exposition de coordonnées mesurées décrivant l'ensemble de composants fabriqués (170) à partir d'une représentation tridimensionnelle après exposition (160b) d'un deuxième échantillon du composant fabriqué (170) ;
le calcul d'une différence entre des paramètres de la distribution statistique avant exposition (175) et des paramètres de la distribution statistique après exposition (175) ; et
l'ajustement d'un modèle de déformation attendu (184) pour l'ensemble de composants fabriqués (170) sur la base de la différence entre les paramètres de la distribution statistique avant exposition (175) et de la distribution statistique après exposition (175), pour modéliser la déformation du composant fabriqué (170).

8. Produit programme informatique (102) selon la revendication 7, dans lequel le modèle de déformation attendu (184) est basé sur un modèle de forme nominal (182) indiquant des coordonnées nominales du composant fabriqué (170) avant exposition opérationnelle, dans lequel le modèle de déformation attendu (184) indique une déformation attendue du composant fabriqué (170) après exposition opérationnelle.

9. Produit programme informatique (102) selon la revendication 8, dans lequel le modèle de forme nominal (182) inclut un fichier de données utilisé pour former le composant fabriqué (170) et dans lequel le modèle de forme nominal (182) inclut un modèle de données (180) d'une version souhaitée du composant fabriqué (170) ou une représentation tridimensionnelle avant exposition (160a) d'un échantillon de modèle du composant fabriqué (170).

10. Produit programme informatique (102) selon la revendication 7, dans lequel le premier échantillon est distinct du deuxième échantillon, mais formé à partir d'un modèle de forme nominal commun (182), et dans lequel le premier échantillon inclut au moins un composant physique (170) et le deuxième échantillon inclut au moins un composant physique et dans lequel la distribution statistique avant exposition (175) et la distribution statistique après exposition (175) sont l'une et l'autre d'un type commun de distribution statistique.

11. Produit programme informatique (102) selon la revendication 7, dans lequel le composant fabriqué (170) inclut un composant de turbomachine.
